# EUROPÄISCHE PATENTSCHRIFT

(11) **EP 2 923 011 B1**
(45) Veröffentlichungstag und Bekanntmachung des Hinweises auf die Patenterteilung: **31.05.2017**
(21) Anmeldenummer: 13789183.4
(22) Anmeldetag: 07.11.2013
(51) Int. Cl.: E04F 13/08

(54) **KOMBINATION MIT EINEM ANKER FÜR PLATTENFÖRMIGE BAUTEILE SOWIE BEFESTIGUNGSANORDNUNG**
COMBINATION COMPRISING AN ANCHOR FOR SLAB-SHAPED COMPONENTS AND FASTENING ARRANGEMENT
COMBINAISON POURVUE D'UN ANCRAGE POUR DES ÉLÉMENTS EN FORME DE PLAQUE ET SYSTÈME DE FIXATION

(30) Priorität: 13.11.2012 DE 102012110868
(43) Veröffentlichungstag der Anmeldung: 30.09.2015
(73) Patentinhaber: fischerwerke GmbH & Co. KG, 72178 Waldachtal (DE)
(72) Erfinder: BURBACH, Jochen, 72160 Horb (DE)
(74) Vertreter: Suchy, Ulrich Johannes
(86) Internationale Anmeldenummer: PCT/EP2013/003344
(87) Internationale Veröffentlichungsnummer: WO 2014/075777

(56) Entgegenhaltungen:
- DE-A1- 2 916 925
- DE-A1- 4 014 812
- DE-U1- 20 007 514
- DE-U1- 29 619 514

## Beschreibung

Die Erfindung betrifft eine Befestigungsanordnung mit einem Anker, einem Bolzen und einem plattenförmigen Bauteil mit den Merkmalen des Oberbegriffs des Anspruchs 1.

Zur Befestigung von Naturwerksteinplatten, beispielsweise aus Sandstein oder Granit, sind Anker aus Metall bekannt, die in einem hinterschnittenen Sackloch verankert werden können. Über die Anker können die Naturwerksteinplatten mit einer Unterkonstruktion verbunden werden, die wiederum an einem Gebäude befestigt ist. Sie dienen somit zur Gestaltung der Fassade. Unter einem hinterschnittenen Sackloch wird in diesem Zusammenhang ein Sackloch verstanden, dass sich in Richtung des Grunds des Sacklochs erweitert. Als fischer Zykon-Plattenanker FZP-1 ist beispielsweise ein derartiger Anker mit einem Innengewinde bekannt, der in einem hinterschnittenen Sackloch bündig gesetzt werden kann, wobei das Sackloch in Richtung seines Grunds zunächst zylindrisch verläuft und sich dann konisch erweitert. Zur Befestigung der Unterkonstruktion, beispielsweise ein Profil oder ein Winkelstück, wird dieses mit einer Befestigungsschraube am Anker befestigt, indem die Befestigungsschraube durch eine Öffnung in der Unterkonstruktion hindurch in das Innengewinde des Ankers geschraubt wird.

Der Vorteil eines derartigen Ankers mit Innengewinde ist die Tatsache, dass die Naturwerksteinplatte als plattenförmiges Bauteil inklusive dem Anker in einem Werk fertig gestellt werden kann und die Bauteile einfach gestapelt zur jeweiligen Baustelle transportiert werden können, da die Anker bündig im Bohrloch sind. Im Gegensatz hierzu ist dies bei den günstigeren Ankern mit einem herausstehenden Bolzen nicht möglich. Diese werden daher häufig erst vor Ort auf der Baustelle gesetzt. Allerdings resultiert aus dem Innengewinde auch, dass der Anker bündig mit der Oberfläche abschließen muss, also mit der durch den Mund des Sacklochs definierten Ebene. Diese Oberfläche wird im Folgenden als innere Oberfläche bezeichnet, da sie bei einer Fassade zum Gebäude hin gewandt ist, im Gegensatz zu der äußeren Oberfläche, die die Sichtseite bildet. Ein derartige Befestigungsanordnung mit einem Anker, der bündig mit der inneren Oberfläche abschießt, ist aus der Offenlegungsschrift DE 40 14 812 A1 bekannt.

Würde der Anker mit Unterstand gesetzt werden, also das rückwärtige Ende ins Innere des Bauteils versetzt sein, so würde sich die Unterkonstruktion auf der inneren Oberfläche abstützen und durch das Anziehen der Befestigungsschraube eine permanente Auszugskraft auf das Bauteil ausgeübt werden. Da diese sich zu anderen Kräften und Momenten, beispielsweise resultierend aus dem Eigengewicht oder Wind-Sog-Kräften, hinzu addiert, werden die Haltewerte des Ankers hierdurch reduziert, gegebenenfalls versagt die Befestigungsanordnung sogar bereits beim Anziehen der Schraube. Schließt der Anker dagegen bündig mit der inneren Oberfläche ab, so stützt sich die Unterkonstruktion auf dem Anker selbst ab. Dies würde zwar auch durch einen Überstand des Ankers erreicht werden, wie dies beispielsweise aus dem Gebrauchsmuster DE 296 19 514 U1 bekannt ist, doch erschwert dieses wiederum die Stapelbarkeit der Naturwerksteinplatten.

Allerdings bedingt das bündige Setzen des Ankers mit der inneren Oberfläche häufig aufwendige Justagearbeiten, weil die Dicken von Naturwerksteinplatten fertigungsbedingt schwanken. Würden sämtliche Bauteile ausgehend von der Position des Ankers in gleichem Abstand zum Gebäude befestigt werden, so ergäbe sich über mehrere Naturwerksteinplatten hinweg betrachtet eine unregelmäßige äußere Oberfläche an der Außenfläche der Fassade. Bei den erwähnten Ankern mit herausstehendem Bolzen wird dieses Problem dadurch umgangen, dass das Sackloch je nach Dicke der Naturwerksteinplatte unterschiedlich tief gebohrt wird und somit auch der Anker jeweils unterschiedlich tief sitzt. Es wird also "auf Restwanddicke" gebohrt, das heißt der Abstand vom Grund des Sacklochs bis zur äußeren Oberfläche ist jeweils konstant. Die Befestigung der Unterkonstruktion erfolgt beispielsweise gegen eine überstehende Hülse des Ankers. Eine Justage jeder Naturwerksteinplatte kann entfallen, so dass die Montage der Fassade vergleichsweise schnell erfolgen kann. Bei Ankern mit Innengewinde ist dies jedoch aufgrund des genannten Zwangs zum bündigen Abschluss mit der inneren Oberfläche nicht möglich.

Aufgabe der Erfindung ist, die Befestigung von plattenförmigen Bauteilen, insbesondere Naturwerksteinplatten, dahingehend zu verbessern, dass die plattenförmigen Bauteile mit vormontierten Ankern gut stapelbar sind und dennoch schnell montiert werden können.

Diese Aufgabe wird erfindungsgemäß durch eine Befestigungsanordnung mit den Merkmalen des Anspruchs 1 gelöst. Die
Erfindung schlägt vor, dass ein Anker mit einem Innengewinde in einem plattenförmigen Bauteil, insbesondere einer Naturwerksteinplatte, verankert wird. Die Verankerung erfolgt insbesondere in einem hinterschnittenen Sackloch. Der Anker ist insbesondere ein für Naturwerksteinplatten geeigneter Anker. Er hat insbesondere eine Länge im unverspreizten Zustand, die maximal dem 2,5-fachen des maximalen Durchmessers des Ankers im unverspreizten Zustand entspricht, ist also relativ kurz, verglichen mit Ankern für die Befestigung in den tragenden Elementen eines Bauwerks. Der Anker umfasst insbesondere ein Spreizelement und/oder kann chemisch in dem plattenförmigen Bauteil verankert sein.

Die Erfindung umfasst weiterhin einen Bolzen, der einen mit dem Innengewinde des Ankers korrespondierenden Außengewindeabschnitt und außerdem ein Lastangriffsmittel aufweist. Der Anker und der Bolzen bilden gemeinsam eine erfindungsgemäße Kombination. In der fertig montierten erfindungsgemäßen Befestigungsanordnung ist der Bolzen mit dem Außengewindeabschnitt in den Anker eingeschraubt und das Lastangriffsmittel dient der Verbindung mit einer Unterkonstruktion. Als ein Grundkörper des Bolzens kann beispielsweise eine Gewindestange oder eine Schraube dienen, wobei das Außengewinde beziehungsweise der Kopf der Schraube das Lastangriffsmittel bildet. Erfindungsgemäß ist am Bolzen zwischen dem Lastangriffsmittel und dem Außengewindeabschnitt ein im Durchmesser gegenüber dem Außengewindeabschnitt erweitertes Anschlagselement angeordnet. "Im Durchmesser erweitert" meint in diesem Zusammenhang, dass ein erster Kreis, der das Anschlagselement umschreibt, größer ist als ein zweiter Kreis, der den Außengewindeabschnitt umschreibt. Das Anschlagselement kann einstückig mit dem Bolzen sein, muss es aber nicht. Eine erste, dem Anker zugewandte Seite des Anschlagselements stützt sich am Anker ab. Dazu kann es direkt an einer Stirnseite des Ankers anliegen, die Abstützung kann jedoch auch indirekt über ein weiteres Bauteil, beispielsweise eine Unterlegscheibe, erfolgen. Die erfindungsgemäße Befestigungsanordnung sieht vor, dass sich eine Unterkonstruktion, beispielsweise ein Profil oder ein Winkelelement, an einer dem Anker abgewandten zweiten Seite des Anschlagselements abstützt. Auch hier kann dies durch eine direkte oder indirekte Anlage erfolgen.

Die erfindungsgemäße Kombination beziehungsweise die mit ihr erstellbare Befestigungsanordnung hat den Vorteil, dass der Anker auch mit Unterstand in dem plattenförmigen Bauteil gesetzt werden kann. Da der Anker nicht heraus steht, kann das plattenförmige Bauteil leicht ohne Abstand gestapelt werden. Der Bolzen mit dem Anschlagselement verlängert den Anker und stellt mit der zweiten Seite eine Anschlagsfläche außerhalb des plattenförmigen Bauteils zur Verfügung, trotz Unterstands des Ankers. Durch die Möglichkeit des Setzens des Ankers mit Unterstand kann der Anker auf Restwanddicke gesetzt werden, also in immer gleichem Abstand zur äußeren Oberfläche des plattenförmigen Bauteils. Bei Verwendung gleicher Bauteile führt dies dazu, dass auch die zweite Seite des Anschlagselements stets in gleichem Abstand zur äußeren Oberfläche positioniert ist. Eine aufwendige Justage der plattenförmigen Bauteile im Bereich der Unterkonstruktion ist somit nicht notwendig, was eine schnelle Montage der Fassade ermöglicht.

Die erfindungsgemäße Kombination aus Anker und Bolzen sieht vor, dass entweder das Lastangriffsmittel ein Schraubenkopf und das Anschlagselement längs verstellbar ist, oder das Lastangriffsmittel ein Gewinde, insbesondere ein Außengewinde, und das Anschlagselement längs unverstellbar und im Durchmesser größer als das Lastangriffsmittel ist. In beiden Fällen ist der Bolzen leicht von Hand in den Anker drehbar und eine konstruktive Umsetzung mit einfachen Mittel möglich. Im ersten Fall kann der Bolzen beispielsweise eine Standardschraube sein und das Anschlagselement eine Mutter, während im zweiten Fall der Bolzen beispielsweise eine Gewindestange und das Anschlagselement eine mit der Gewindestange verstemmte oder verklebte Mutter sein kann.

Vorzugsweise wird der Anker mit Unterstand gesetzt. Dies sichert bei einer Vielzahl von Befestigungen und schwankenden Dicken der plattenförmigen Bauteile, dass keiner der Anker aus dem plattenförmigen Bauteil heraussteht und dass diese somit stapelbar sind. Der Unterstand beträgt vorzugsweise 1 bis 6 mm, insbesondere 2 bis 4 mm, wodurch gängige Dickentoleranzen von Naturwerksteinplatten sicher ausgeglichen werden. Insbesondere ist die Höhe des Anschlagselements, also die Erstreckung in Längsrichtung, gleich oder größer als der Unterstand.

In einer bevorzugten Befestigungsanordnung stützt sich die dem Anker zugewandte erste Seite des Anschlagselements an einer Anlageschulter des plattenförmigen Bauteils ab. Die Abstützung hat den Vorteil, dass bei Druckkräften, beispielsweise durch Winddruck, diese vom plattenförmigen Bauteil direkt auf das Anschlagselement übertragen werden können und dadurch die Gefahr eines Durchbrechens des Ankers durch das plattenförmige Bauteil im Bereich des Grunds des Sacklochs verringert wird.

Die Abstützung kann einerseits dadurch erreicht werden, dass der Anker ohne Unterstand gesetzt wird, so dass sich die erste Seite des Anschlagselements in einer Ebene sowohl am Anker als auch an der die Anlageschulter bildenden inneren Oberfläche abstützt. Andererseits kann aber auch eine Stufe in der Sackbohrung vorgesehen werden und/oder das Anschlagselement weist eine gestufte erste Seite auf. Generell ist bei einer Anlage sowohl am Anker als auch an einer Anlageschulter des plattenförmigen Bauteils, also einer doppelten Anlage, darauf zu achten, dass durch Einhaltung entsprechender Toleranzen das Anschlagselement gegen den Anker verspannt ist und nur leicht an der Anlageschulter anliegt, beziehungsweise erst bei Druckkräften.

Ist eine derartige doppelte Anlage nicht gewünscht, so ist das Anschlagselement im Durchmesser kleiner als oder gleich groß wie der Anker im unverspreizten Zustand. Der Größenvergleich zielt wiederum auf einen Vergleich der die jeweiligen Bauteile umschreibenden Kreise ab. Da der Anker im unverspreizten Zustand in das Sackloch geschoben wird, ist das Anschlagselement damit auch kleiner oder gleich groß im Durchmesser verglichen mit dem Sackloch. Durch ein derartiges Anschlagselement wird somit erreicht, dass das Anschlagselement bis in das Sackloch ragen kann, ohne in oder an diesem zur Anlage zu kommen.

Vorzugsweise weist das Anschlagselement Werkzeugangriffsflächen auf, entweder zur Verstellung längs des Bolzens oder zum Verspannen des Bolzens gegen den Anker. Als Werkzeugangriffsflächen kommen insbesondere äußere parallele Abflachungen zur Bedienung mit Werkzeugschlüsseln oder Innensechskant- beziehungsweise Torx-Aufnahmen in Frage. Alternativ oder zusätzlich sind am Lastangriffsmittel Werkzeugangriffsflächen angeordnet.

Die Erfindung wird nachfolgend anhand dreier Ausführungsbeispiele in je einer Figur erläutert.

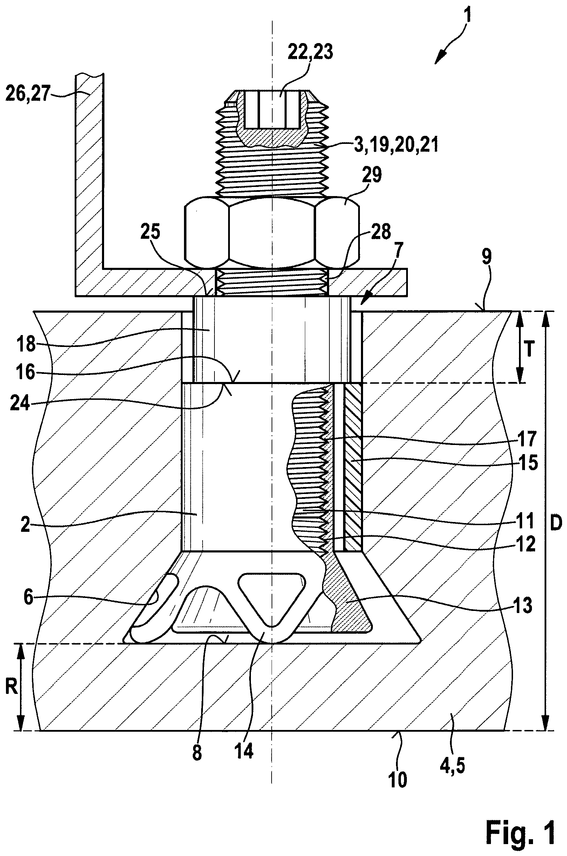

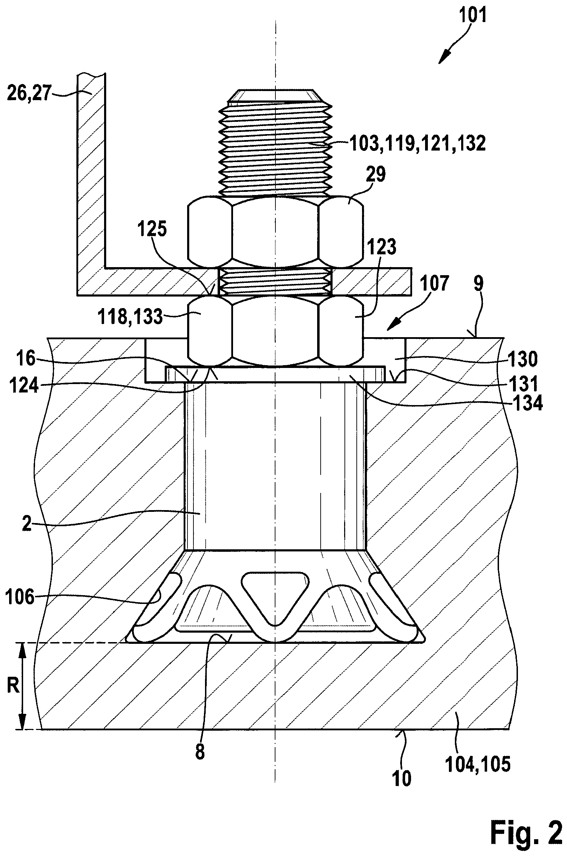

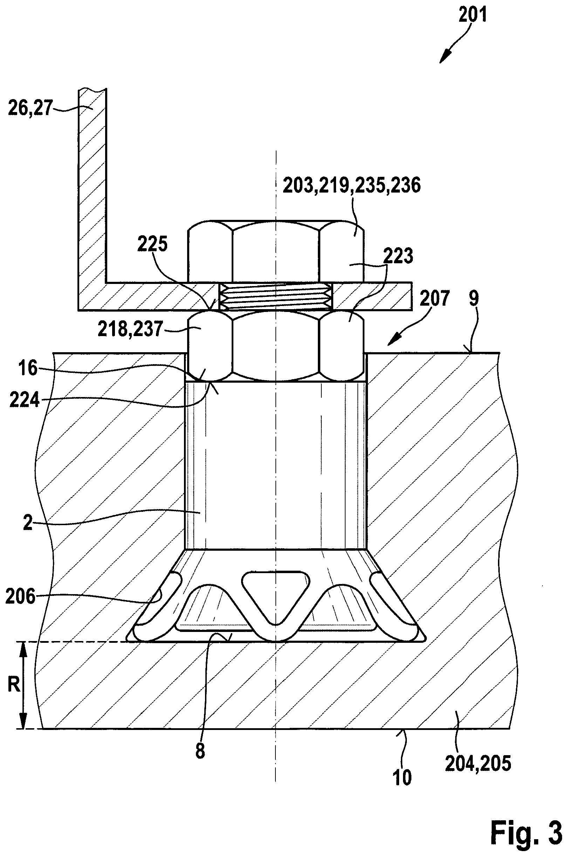

Die Figuren 1 bis 3 zeigen in Schnittdarstellungen jeweils eine erfindungsgemäße Befestigungsanordnung 1, 101, 201, die wiederum jeweils eine erfindungsgemäße Kombination aus einem Anker 2 und einem Bolzen 3, 103, 203 umfasst. Anhand des in Figur 1 dargestellten ersten Ausführungsbeispiels soll zunächst der Grundaufbau erläutert werden, um dann anhand der Figuren 2 und 3 lediglich die Unterschiede bei den anderen beiden Ausführungsbeispielen zu erläutern. Gleiche Elemente sind dabei mit gleichen Bezugsziffern bezeichnet.

Die Befestigungsanordnung 1 dient der Befestigung eines plattenförmigen Bauteils 4 in Form einer Naturwerksteinplatte 5 an einer nicht dargestellten Gebäudestruktur. In die Naturwersteinplatte 5 ist dazu zunächst ein hinterschnittenes Sackloch 6 eingebracht worden. Von einem Mund 7 des Sacklochs 6 aus erstreckt sich das Sackloch 6 zunächst zylindrisch und erweitert sich dann konisch zum einem Grund 8 hin. Das Sackloch 6 ist von einer inneren Oberfläche 9 der Naturwerksteinplatte 5 aus gebohrt. Es ist so tief gebohrt, dass eine vorbestimmte Restwanddicke R zwischen dem Grund 8 und einer äußeren Oberfläche 10 verbleibt. Die äußere Oberfläche 10 bildet eine Sichtseite für die mit der Naturwerksteinplatte 5 gebildete Fassade.

In das Sackloch 6 ist der Anker 2 eingebracht. Der Anker 2 ist speziell für die Befestigung von plattenförmigen Bauteilen gestaltet. Im unverspreizten Zustand (nicht dargestellt) weist er ein Verhältnis der Länge zum maximalen Durchmesser von etwa 1,8 auf, ist also relativ kurz. Ein Grundkörper 11 des Ankers 2 aus Metall weist einen hülsenartigen Abschnitt auf, der in Richtung des Munds 7 des Sacklochs 6 gewandt und von einem Innengewinde 12 durchsetzt ist. In Richtung des Grunds 8 des Sacklochs schließt sich hieran ein sich im Durchmesser konisch erweiternder Spreizkonus 13 an. Das Innengewinde 12 erstreckt sich auch in diesen Spreizkonus 13, also über die gesamte Länge des Grundkörpers 11. Zum Verankern des Ankers 2 wird eine Spreizhülse 14 über den Spreizkonus 13 geschoben. Sie wird dabei, ausgehend von einem Durchmesser, der in etwa dem zylindrischen Teil des Sacklochs 6 entspricht, konisch verspreizt. Die Verspreizung erfolgt mittels einer den Grundkörper 11 umgebenden Hülse 15 aus Kunststoff, die hierzu entlang der Längsachse des Ankers 2 gegenüber dem Grundkörper 11 bis in die dargestellte Position verschoben wird. Die dem Mund 7 des Sacklochs 6 zugewandte Seite der Hülse 15 bildet zusammen mit der entsprechenden Seite des Grundkörpers 11 eine Stirnseite 16 des Ankers 2.

Für die Erstellung einer Fassade werden eine Vielzahl derartiger Naturwerksteinplatten 5 auf diese Weise werksseitig, also beispielsweise beim Hersteller der Naturwerksteinplatten 5, mit Ankern 2 versehen. Fertigungstechnisch bedingt schwanken dabei die Dicken D der Naturwerksteinplatten 5 um etwa +/- 1 mm. Erfindungsgemäß werden die Sacklöcher jeweils so tief gebohrt, dass immer die gleiche Restwanddicke R verbleibt. Sie ist so bestimmt, dass sich stets eine Tiefe T des Unterstands des Ankers 2 gegenüber der inneren Oberfläche 9 der Naturwerksteinplatte 5 von 2 bis 4 mm ergibt. Der Unterstand ergibt sich aus dem Versatz der Stirnseite 16 zur inneren Oberfläche 9 der Naturwerksteinplatte 5. Da keiner der Anker 2 über die innere Oberfläche 9 hinausragt, sind die Naturwerksteinplatten 5 ohne Zwischenlagen oder dergleichen einfach stapelbar und können als kompakter Stapel zu einer Baustelle transportiert werden.

In das Innengewinde 12 des Ankers 2 ist der Bolzen 3 mit einem Außengewindeabschnitt 17 eingeschraubt. Dieser Montageschritt kann beispielsweise vor Ort auf der Baustelle erfolgen, wo die Naturwerksteinplatte 5 Teil einer Fassade werden soll. An den Außengewindeabschnitt 17 schließt sich einstückig ein im Durchmesser erweitertes zylinderförmiges Anschlagselement 18 und hieran wiederum einstückig ein Lastangriffsmittel 19 in Form eines Außengewindebolzens 20 mit einem Außengewinde 21 an. Das Anschlagselement 18 hat einen geringeren Durchmesser als der Anker 2 in unverspreiztem Zustand und passt daher mit Spiel in das Sackloch 6. Die Länge des Anschlagselements 18 ist größer als die Tiefe T es Unterstands, so dass das Anschlagselement 18 aus dem Sackloch 6 ragt. Der Außengewindebolzen 20 und der Außengewindeabschnitt 17 haben den gleichen Durchmesser, sind hier aber verschieden lang dargestellt. Sie könnten jedoch auch gleich lang sein, so dass der Bolzen 3 auch umgekehrt in den Anker 2 geschraubt werden kann. Der Außengewindebolzen 20 weist an seinem Ende einen Innensechskant 22 mit Werkzeugangriffsflächen 23 auf. Mittels des Innensechskants 22 ist der Bolzen 3 so weit in den Anker 2 eingeschraubt worden, bis eine dem Anker 2 zugewandte erste Seite 24 des Anschlagelements 18 an der Stirnseite 16 des Ankers 2 anliegt und sich auf diese Weise an dem Anker 2 abstützt. Eine gegenüberliegende zweite Seite 25 des Anschlagelements 18 dient der Anlage einer Unterkonstruktion 26, die hier nur teilweise durch ein Winkelblech 27 dargestellt ist. Das Winkelblech 27 weist eine Bohrung 28 auf, durch die der Außengewindebolzen 20 ragt. Das Winkelblech 27 ist mit einer ersten Mutter 29 gegen das Anschlagselement 18 verspannt. Die Unterkonstruktion 26 kann beispielsweise für eine Fassade ein System aus horizontalen und vertikalen Profilen sowie Agraffen und Konsolen umfassen (nicht dargestellt), worauf es hier jedoch nicht ankommt.

Da bei unterschiedlichen Dicken D der verschiedenen Natursteinplatten 5 stets die gleiche Restwanddicke R eingehalten wird, hat die Unterkonstruktion 26 stets den gleichen Abstand zur äußeren Oberfläche 10 der Naturwerksteinplatte 5. Werden die Winkelbleche 27 also beispielsweise in ein gerades Horizontalprofil eingehängt (nicht dargestellt), so ergibt sich automatisch, dass die äußeren Oberflächen 10 der Naturwerksteinplatten 5 in einer Ebene liegen. Somit sind keine Justagearbeiten notwendig, was die Montage stark vereinfacht.

Bei der in Figur 2 dargestellten Befestigungsanordnung 101 ist das Sackloch 106 zwar ebenfalls auf die gleiche Restwanddicke R gebohrt, doch ist beim Bohren am Mund 107 außerdem eine Stufe 130 ausgeformt worden. Diese Stufe 130 hat bei unterschiedlichen Naturwerksteinplatten 105 stets den gleichen Abstand zum Grund 8 des Sacklochs 106. Die Stufe 130 bildet eine Anlageschulter 131 für das Anschlagselement 118.

In den Anker 2 ist wiederum ein Bolzen 103 mit einem Außengewindeabschnitt (nicht dargestellt) eingeschraubt. Der Bolzen 103 ist in diesem Ausführungsbeispiel jedoch eine Gewindestange 132, auf die eine zweite Mutter 133 als Anschlagselement 118 geschraubt und mit der Gewindestange 132 verstemmt oder verklebt ist, so dass das Anschlagselement 118 längs unverstellbar ist. Hieraus ergibt sich ein einfacher Aufbau aus Normteilen. Die dem Anker 2 zugewandte erste Seite 124 des Anschlagselements 118 stützt sich sowohl auf dem Anker 2 als auch auf der Anlageschulter 131 der Naturwerksteinplatte 105 ab. Die Abstützung erfolgt jedoch nicht durch direkte Anlage, sondern über eine Unterlegscheibe 134. Die doppelte Abstützung hat den Vorteil, dass Druckkräfte, die beispielsweise von Winddruckkräften auf die äußere Oberfläche 10 der Naturwerksteinplatte 105 wirken, nicht im Bereich des Munds 107 des Sacklochs 106 auf den Anker 2 übertragen werden, sondern über die Anlageschulter 131 auf den Bolzen 103. Insbesondere bei geringen Restwanddicken R wird somit die Gefahr eines Durchbrechens der Naturwerksteinplatte 105 im Bereich des Munds 107 des Sacklochs 106 vermieden.

In dem in Figur 3 dargestellten dritten Ausführungsbeispiel ist der Bolzen 203 durch eine Schraube 235 mit einem Schraubenkopf 236 in Sechskantform als Lastangriffsmittel 219 gebildet. Die Erstellung des Sacklochs 206 und die Vormontage des Ankers 2 erfolgt wie im ersten Ausführungsbeispiel. Zur Befestigung des Winkelblechs 27 wird zunächst eine dritte Mutter 237 auf die Stirnseite 16 des Ankers 2 und dann das Winkelblech 27 auf die dritte Mutter 237 aufgelegt. Dann wird die Schraube 235 durch das Winkelblech 27 und die dritte Mutter 237 hindurch geschraubt und gegen den Anker 2 verspannt. Die dritte Mutter 237 dient somit als längs verstellbares Anschlagselement 218. Sie ist im Durchmesser so dimensioniert, dass sie in das Sackloch 206 passt, also geringfügig kleiner oder gleich wie der Anker 2 im unverspreizten Zustand. Auch in diesem Ausführungsbeispiel wird der Bolzen 203 und das Anschlagselement 218 durch Normteile gebildet.

### Bezugszeichenliste

### Kombination mit einem Anker für plattenförmige Bauteile sowie Befestigungsanordnung

- 1, 101, 201: Befestigungsanordnung
- 2: Anker
- 3, 103, 203: Bolzen
- 4, 104, 204: plattenförmiges Bauteil
- 5, 105, 205: Naturwerksteinplatte
- 6, 106, 206: Sackloch
- 7, 107, 207: Mund des Sacklochs 6, 106, 206
- 8: Grund des Sacklochs 6, 106, 206
- 9: innere Oberfläche der Naturwerksteinplatte 5, 105, 205
- 10: äußere Oberfläche der Naturwerksteinplatte 5, 105, 205
- 11: Grundkörper des Ankers 2
- 12: Innengewinde
- 13: Spreizkonus
- 14: Spreizhülse
- 15: Hülse
- 16: Stirnseite des Ankers 2
- 17: Außengewindeabschnitt
- 18, 118, 218: Anschlagselement
- 19, 119, 219: Lastangriffsmittel
- 20: Außengewindebolzen
- 21, 121: Außengewinde
- 22: Innensechskant
- 23: Werkzeugangriffsflächen
- 24, 124, 224: erste Seite des Anschlagselements 18, 118, 218
- 25, 125, 225: zweite Seite des Anschlagselements 18, 118, 218
- 26: Unterkonstruktion
- 27: Winkelblech
- 28: Bohrung im Winkelblech 27
- 29: erste Mutter
- 130: Stufe im Sackloch 106
- 131: Anlageschulter des plattenförmigen Bauteils 104
- 132: Gewindestange
- 133: zweite Mutter
- 134: Unterlegscheibe
- 235: Schraube
- 236: Schraubenkopf
- 237: dritte Mutter
- D: Dicke des plattenförmigen Bauteils 4, 104, 204
- R: Restwanddicke
- T: Tiefe des Unterstands

## Patentansprüche

1. Befestigungsanordnung
- mit einem Anker (2) für plattenförmige Bauteile (4, 104, 204), insbesondere zur Verankerung in einem hinterschnittenen Sackloch (6, 106, 206), wobei der Anker (2) ein Innengewinde (12) aufweist,
- mit einem Bolzen (3, 103, 203), mit einem mit dem Innengewinde (12) korrespondierenden Außengewindeabschnitt (17) und einem Lastangriffsmittel (19, 119, 219) zur Verbindung des Ankers (2) mit einer Unterkonstruktion (26),
- wobei am Bolzen (3, 103, 203) zwischen dem Lastangriffsmittel (19, 119, 219) und dem Außengewindeabschnitt (17) ein im Durchmesser gegenüber dem Außengewindeabschnitt (17) erweitertes Anschlagselement (18, 118, 218) angeordnet ist,
- wobei sich eine dem Anker (2) zugewandte erste Seite (24, 124, 224) des Anschlagselements (18, 118, 218) am Anker (2) abstützt, und
- mit einem plattenförmigen Bauteil (4, 104, 204),
- in dem der Anker (2) verankert ist,
- mit dem Bolzen (3, 103, 203), mit dem in das Innengewinde (12) eingeschraubten Außengewindeabschnitt (17) und dem Lastangriffsmittel (19, 119,219),
- und mit einer Unterkonstruktion (26), die über das Lastangriffsmittel (19, 119, 219) des Bolzens (3, 103, 203) mit dem Anker (2) verbunden ist,
- wobei am Bolzen (3, 103, 203) zwischen dem Lastangriffsmittel (19, 119, 219) und dem Außengewindeabschnitt (17) das im Durchmesser gegenüber dem Außengewindeabschnitt (17) erweiterte Anschlagselement (18, 118, 218) angeordnet ist,
- wobei sich die dem Anker zugewandte erste Seite (24, 124, 224) des Anschlagselements (18, 118, 218) am Anker (2) und die dem Anker (2) abgewandte zweite Seite (25, 125, 225) des Anschlagselements (18, 118, 218) an der Unterkonstruktion (26) abstützt,
**dadurch gekennzeichnet,**
- **dass** entweder das Lastangriffsmittel (219) ein Schraubenkopf (236) und das Anschlagselement (218) längs verstellbar ist, oder
- **dass** das Lastangriffsmittel (19, 119) ein Gewinde, insbesondere ein Außengewinde (21, 121), und das Anschlagselement (18, 118) längs unverstellbar und im Durchmesser größer als das Lastangriffsmittel (19, 119) ist.

2. Befestigungsanordnung nach Anspruch 1, **dadurch gekennzeichnet, dass** der Anker (2) einen Unterstand im plattenförmigen Bauteil (4, 104, 204) aufweist.

3. Befestigungsanordnung nach Anspruch 2, **dadurch gekennzeichnet, dass** die Tiefe (T) des Unterstands 1 bis 6 mm, insbesondere 2 bis 4 mm, beträgt.

4. Befestigungsanordnung nach Anspruch 1, **dadurch gekennzeichnet, dass** sich die dem Anker (2) zugewandte erste Seite (124) des Anschlagselements (118) an einer Anlageschulter (131) des plattenförmigen Bauteils (104) abstützt.

5. Befestigungsanordnung nach einem der vorherigen Ansprüche, **dadurch gekennzeichnet, dass** der Anker (2) in einem hinterschnittenen Sackloch (6, 106, 206) verankert ist.

6. Befestigungsanordnung nach einem der vorherigen Ansprüche, **dadurch gekennzeichnet, dass** das Anschlagselement (18, 118, 218) im Durchmesser gleich oder kleiner ist als der Anker (2) im unverspreizten Zustand.

7. Befestigungsanordnung nach einem der vorherigen Ansprüche, **dadurch gekennzeichnet, dass** am Anschlagselement (118, 218) Werkzeugangriffsflächen (123, 223) angeordnet sind.

8. Befestigungsanordnung nach einem der vorherigen Ansprüche, **dadurch gekennzeichnet, dass** an dem Lastangriffsmittel (19, 219) Werkzeugangriffsflächen (23, 223) angeordnet sind.

## Claims

1. Fixing arrangement
- having an anchor (2) for panel-like components (4, 104, 204), especially for anchoring in an undercut blind hole (6, 106, 206), the anchor (2) having an internal thread (12),
- having a bolt (3, 103, 203), with an external threaded portion (17), which is complementary to the internal thread (12), and a load-application means (19, 119, 219) for connection of the anchor (2) to a substructure (26),
- wherein on the bolt (3, 103, 203), between the load-application means (19, 119, 219) and the external threaded portion (17), there is arranged a stop element (18, 118, 218) which is larger in diameter than the external threaded portion (17),
- wherein a first end (24, 124, 224) of the stop element (18, 118, 218), facing the anchor (2), is supported against the anchor (2), and
- having a panel-like component (4, 104, 204),
- in which the anchor (2) is anchored,
- having the bolt (3, 103, 203), with the external threaded portion (17), which is screwed into the internal thread (12), and the load-application means (19, 119, 219),
- and having a substructure (26) which is connected to the anchor (2) *via* the load-application means (19, 119, 219) of the bolt (3, 103, 203),
- wherein on the bolt (3, 103, 203), between the load-application means (19, 119, 219) and the external threaded portion (17), there is arranged the stop element (18, 118, 218) which is larger in diameter than the external threaded portion (17),
- wherein the first end (24, 124, 224) of the stop element (18, 118, 218), facing the anchor, is supported against the anchor (2) and the second end (25, 125, 225) of the stop element (18, 118, 218), facing away from the anchor (2), is supported against the substructure (26),
**characterised in that**
- either the load-application means (219) is a screw head (236) and the stop element (218) is longitudinally displaceable, or
- the load-application means (19, 119) is a thread, especially an external thread (21, 121), and the stop element (18, 118) is longitudinally immovable and is larger in diameter than the load-application means (19, 119).

2. Fixing arrangement according to claim 1, **characterised in that** the anchor (2) has a recessed position in the panel-like component (4, 104, 204).

3. Fixing arrangement according to claim 2, **characterised in that** the depth (T) of recess is from 1 to 6 mm, especially from 2 to 4 mm.

4. Fixing arrangement according to claim 1, **characterised in that** the first end (124) of the stop element (118), facing the anchor (2), is supported against a bearing shoulder (131) of the panel-like component (104).

5. Fixing arrangement according to any one of the preceding claims, **characterised in that** the anchor (2) is anchored in an undercut blind hole (6, 106, 206).

6. Fixing arrangement according to any one of the preceding claims, **characterised in that** the stop element (18, 118, 218) has the same diameter as or is smaller in diameter than the anchor (2) in the unexpanded state.

7. Fixing arrangement according to any one of the preceding claims, **characterised in that** tool-application faces (123, 223) are arranged on the stop element (118, 218).

8. Fixing arrangement according to any one of the preceding claims, **characterised in that** tool-application faces (23, 223) are arranged on the load-application means (19, 219).

## Revendications

1. Dispositif de fixation comprenant
- une pièce d'ancrage (2) destinée à des composants structurels (4, 104, 204) en forme de plaques, notamment en vue de l'ancrage dans un trou borgne contre-dépouillé (6, 106, 206), ladite pièce d'ancrage (2) étant munie d'un filetage intérieur (12),
- un boulon (3, 103, 203) doté d'une région (17) à filetage extérieur concordant avec ledit filetage intérieur (12), et d'un moyen (19, 119, 219) d'application de charges qui est dévolu à la liaison de ladite pièce d'ancrage (2) avec une structure sous-jacente (26),
- sachant qu'un élément de butée (18, 118, 218), dont le diamètre est élargi par rapport à celui de la région (17) à filetage extérieur, est interposé entre ledit moyen (19, 119, 219) d'application de charges et ladite région (17) à filetage extérieur, sur ledit boulon (3, 103, 203),
- sachant qu'un premier côté (24, 124, 224) dudit élément de butée (18, 118, 218), tourné vers la pièce d'ancrage (2), prend appui contre ladite pièce d'ancrage (2) ; et
- un composant structurel (4, 104, 204) en forme de plaque,
- dans lequel ladite pièce d'ancrage (2) est verrouillée ;
- ledit boulon (3, 103, 203), comportant le moyen (19, 119, 219) d'application de charges et la région (17) à filetage extérieur qui est vissée dans le filetage intérieur (12) ;
- et une structure sous-jacente (26), reliée à ladite pièce d'ancrage (2) par l'intermédiaire dudit moyen (19, 119, 219) d'application de charges sur ledit boulon (3, 103,203),
- sachant que l'élément de butée (18, 118, 218), dont le diamètre est élargi par rapport à celui de la région (17) à filetage extérieur, est interposé entre ledit moyen (19, 119, 219) d'application de charges et ladite région (17) à filetage extérieur, sur ledit boulon (3, 103, 203),
- sachant que le premier côté (24, 124, 224) de l'élément de butée (18, 118, 218), tourné vers la pièce d'ancrage, prend appui contre ladite pièce d'ancrage (2) et que le second côté (25, 125, 225) dudit élément de butée (18, 118, 218), tourné à l'opposé de ladite pièce d'ancrage (2), est en appui contre la structure sous-jacente (26),
**caractérisé par le fait**
- **que** le moyen (219) d'application de charges est une tête de vis (236), et l'élément de butée (218) est réglable longitudinalement ; ou
- **que** ledit moyen (19, 119) d'application de charges est un filetage, en particulier un filetage extérieur (21, 121), ledit élément de butée (18, 118) n'étant pas réglable longitudinalement, et étant pourvu d'un diamètre supérieur à celui dudit moyen (19, 119) d'application de charges.

2. Dispositif de fixation selon la revendication 1, **caractérisé par le fait que** la pièce d'ancrage (2) est logée avec encaissement dans le composant structurel (4, 104, 204) en forme de plaque.

3. Dispositif de fixation selon la revendication 2, **caractérisé par le fait que** la profondeur (T) de l'encaissement mesure de 1 à 6 mm, en particulier de 2 à 4 mm.

4. Dispositif de fixation selon la revendication 1, **caractérisé par le fait que** le premier côté (124) de l'élément de butée (118), tourné vers la pièce d'ancrage (2), est en appui contre un épaulement d'adossement (131) du composant structurel (104) en forme de plaque.

5. Dispositif de fixation selon l'une des revendications précédentes, **caractérisé par le fait que** la pièce d'ancrage (2) est verrouillée dans un trou borgne contre-dépouillé (6, 106, 206).

6. Dispositif de fixation selon l'une des revendications précédentes, **caractérisé par le fait que** le diamètre de l'élément de butée (18, 118, 218) est égal ou inférieur à celui de la pièce d'ancrage (2) à l'état non écarté.

7. Dispositif de fixation selon l'une des revendications précédentes, **caractérisé par le fait que** des surfaces (123, 223) d'engagement d'outils sont ménagées sur l'élément de butée (118, 218).

8. Dispositif de fixation selon l'une des revendications précédentes, **caractérisé par le fait que** des surfaces (23, 223) d'engagement d'outils sont ménagées sur le moyen (19, 219) d'application de charges.
